# EUROPÄISCHE PATENTSCHRIFT

(11) **EP 4 257 381 B1**
(45) Veröffentlichungstag und Bekanntmachung des Hinweises auf die Patenterteilung: **08.04.2026**
(21) Anmeldenummer: 23156214.1
(22) Anmeldetag: 13.02.2023
(51) Int. Cl.: B60C 23/04, B60C 23/00

(54) **VERFAHREN ZUR BESTIMMUNG EINER POSITION EINES FAHRZEUGLUFTREIFENS**
METHOD FOR DETERMINING A POSITION OF A PNEUMATIC TYRE FOR A VEHICLE
PROCÉDÉ DE DÉTERMINATION D'UNE POSITION D'UN PNEU DE VÉHICULE

(30) Priorität: 08.04.2022 DE 102022203598
(43) Veröffentlichungstag der Anmeldung: 11.10.2023
(73) Patentinhaber: Continental Reifen Deutschland GmbH, 30175 Hannover (DE)
(72) Erfinder: Sahlmüller, Baldo, 30165 Hannover (DE); Lehmann, Jörg, 30165 Hannover (DE); James, Akhil, 30165 Hannover (DE); Nettelmann, Marc, 30165 Hannover (DE)
(74) Vertreter: Continental Corporation

(56) Entgegenhaltungen:
- EP-A1- 1 616 722
- CN-B- 103 722 992
- DE-A1- 10 243 913
- DE-A1- 102011 055 886
- US-A1- 2004 083 034

## Beschreibung

Die Erfindung betrifft ein Verfahren zur Bestimmung einer Position eines Fahrzeugluftreifens an einem Fahrzeug.

Die Erfindung geht aus von einem Verfahren zur Bestimmung einer Position eines Fahrzeugluftreifens an einem Fahrzeug. Dabei weist das Verfahren mindestens einen der folgenden Schritte auf:
- Bereitstellen eines Fahrzeugs, wobei das Fahrzeug eine Mehrzahl an Fahrzeugluftreifen aufweist, wobei jeder der Fahrzeugluftreifen eine Messvorrichtung aufweist, wobei jede Messvorrichtung geeignet ist, eine Temperatur des Fahrzeugluftreifens, in oder an dem die Messvorrichtung angeordnet ist, zu messen;
- Messen der Temperaturen der Fahrzeugluftreifen mittels der Messvorrichtungen, wobei jedem Fahrzeugluftreifen ein Wert, der an oder in ihm gemessenen Temperatur zugeordnet wird;
- Bereitstellen einer Auswertevorrichtung, wobei die den Fahrzeugluftreifen zugeordneten Werte der mittels der Messvorrichtungen gemessenen Temperaturen mittels der Auswertevorrichtung ausgewertet werden können.

Die Zuordnung der Werte der gemessenen Temperaturen zu den Fahrzeugluftreifen erfolgt insbesondere mittels der Auswertevorrichtung.

Aus dem Stand der Technik sind Verfahren zur Bestimmung einer Position eines Fahrzeugluftreifens an einem Fahrzeug bekannt. Dabei ist es aus dem Stand der Technik insbesondere bekannt, die Position eines Fahrzeugluftreifens an einem Fahrzeug derart zu bestimmen, dass mittels solcher Messvorrichtungen, die in den Fahrzeugluftreifen angeordnet sind, Informationen über eine gemessene physikalische Größe versendet werden, wobei zugleich mit den Informationen über die gemessene physikalische Größe auch Informationen über die Position eines Fahrzeugluftreifens an dem Fahrzeug versendet werden. Zu einem Versenden der Information verfügen die Messvorrichtungen über Sendemittel, wobei die Sendemittel insbesondere zum Senden und/oder Empfangen elektromagnetischer Signale geeignet sind. Anhand dieser gesamten gesendeten Informationen kann die Position des Fahrzeugluftreifens an dem Fahrzeug bestimmt werden.

Dieses Versenden zusätzlicher Informationen über die Position eines Fahrzeugluftreifens an dem Fahrzeug könnte mit einem erhöhten Sendeaufwand, also einer erhöhten erforderlichen Sendeleistung, seitens der Messvorrichtungen einhergehen. Darüber hinaus könnten solche aus dem Stand der Technik bekannte Verfahren mit einer erhöhten Nutzung von Speicherplatz auf Speicherelementen der Messvorrichtungen einhergehen, da in den Speicherelementen der Messvorrichtungen Informationen über die räumliche Position des jeweiligen Fahrzeugluftreifens an dem Fahrzeug gespeichert sein müssten.

Der Stand der Technik wird gebildet durch die EP1616722A1, die CN103722992B und die US2004/083034A1.

Die aus dem Stand der Technik bekannten Verfahren zur Bestimmung einer Position eines Fahrzeugluftreifens an einem Fahrzeug könnten daher nicht optimal ausgebildet sein.

Der Erfindung liegt daher die Aufgabe zugrunde, ein verbessertes Verfahren zur Bestimmung einer Position eines Fahrzeugluftreifens an einem Fahrzeug bereitzustellen, wobei insbesondere unnötig hohe Sendeleistungen von Messvorrichtungen und ein unnötiges Belegen von Speicherplatz auf Speicherelementen der Messvorrichtungen vermieden werden sollen.

Gelöst wird die erfindungsgemäß gestellte Aufgabe mit den Verfahrensschritten des Anspruchs 1.

Der Bestimmung der Position anhand des Modells liegen voneinander unterscheidbare Temperaturcharakteristika der Fahrzeugluftreifen zugrunde, wobei die voneinander unterscheidbaren Temperaturcharakteristika von der Position des Fahrzeugluftreifens an dem Fahrzeug abhängen. Die Temperaturcharakteristika betreffen die mittels der Messvorrichtungen gemessenen Temperaturen der Fahrzeugluftreifen.

Beispielsweise unterscheidet sich die Temperaturcharakteristik eines Fahrzeugluftreifens, der sich beispielsweise an einer Achse eines Fahrzeugs mit einer Mehrfachbereifung weiter innerhalb der Achse befindet, von der Temperaturcharakteristik eines an der gleichen Achse weiter außen angeordneten Fahrzeugluftreifens.

Der an der Achse weiter innen angeordnete Fahrzeugluftreifens wird beispielsweise von weiter außen angeordneten Fahrzeugluftreifen oder von weiteren Komponenten des Fahrzeugs vor einem Fahrtwind geschützt. Der weiter außen angeordnete Fahrzeugluftreifen ist hinsichtlich des Fahrtwindes ungeschützter, als es der weiter innen angeordnete Fahrzeugluftreifen ist. Dieser weiter außen angeordnete Fahrzeugluftreifen ist daher einem stärkeren Fahrtwind beispielsweise derart ausgesetzt, dass dieser Fahrtwind zu einer Kühlung des Fahrzeugluftreifens führt.

Durch den erfindungsgemäßen Umstand, wonach das Verfahren den zuvor genannten weiteren Schritt aufweist, kann eine Bestimmung der Position des jeweiligen Fahrzeugluftreifens am Fahrzeug in einer bezüglich der einzelnen Messvorrichtungen extern angeordneten Auswerteeinheit vorgenommen werden ohne, dass eine spezifische Information über die Position des Fahrzeugluftreifens an dem Fahrzeug mittels der Messvorrichtung gesendet werden müsste. Bei der extern angeordneten Auswerteeinheit handelt es sich insbesondere um einen Computer.

Dadurch, dass die Position des jeweiligen Fahrzeugluftreifens am Fahrzeug lediglich in Abhängigkeit, der den Fahrzeugluftreifen zugeordneten Werten der gemessenen Temperaturen bestimmt wird, ist ein Mitsenden weiterer spezifischer Information über die Position des Fahrzeugluftreifens an dem Fahrzeug nicht erforderlich.

Insgesamt ist somit ein besonderes Senden von Informationen über die Position des Fahrzeugluftreifens an dem Fahrzeug mittels der einzelnen Messvorrichtungen nicht erforderlich. Dies führt zu einer verringerten erforderlichen Sendeleistung der einzelnen Messvorrichtungen. Ferner ist ein Vorhalten von Speicherplatz auf Speicherelementen von Messvorrichtungen, wobei eine Information über die Position des Fahrzeugluftreifens am Fahrzeug in dem Speicherelement gespeichert werden müsste, nicht erforderlich.

Somit wird ein verbessertes Verfahren zur Bestimmung der Position eines Fahrzeugluftreifens an einem Fahrzeug bereitgestellt.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung wird die Position des jeweiligen Fahrzeugluftreifens am Fahrzeug in Abhängigkeit der den Fahrzeugluftreifen zugeordneten Werten der gemessenen Temperaturen mittels des Modells mittels der Auswertevorrichtung bestimmt.

Bei der Auswertevorrichtung kann es sich beispielsweise um eine innerhalb oder außerhalb des Fahrzeugs angeordnete elektronisch oder elektrisch wirkende Vorrichtung oder um eine Computervorrichtung handeln.

Erfindungsgemäß wird die Position des jeweiligen Fahrzeugluftreifens am Fahrzeug in Abhängigkeit ausschließlich solcher gemessener Temperaturen bestimmt, die erst ab einer Mindestzeitdauer gemessen worden sind. Dabei handelt es sich bei der Mindestzeitdauer um eine Zeitdauer ab dem Zeitpunkt, zu dem ein ununterbrochener Fahrbetrieb des Fahrzeugs aufgenommen worden ist.

Durch den erfindungsgemäßen Umstand, wonach die Position des jeweiligen Fahrzeugluftreifens am Fahrzeug in Abhängigkeit ausschließlich solcher gemessener Temperaturen bestimmt wird, die erst ab einer Mindestzeitdauer gemessen worden sind, wobei es sich bei der Mindestzeitdauer um eine Zeitdauer ab dem Zeitpunkt, zu dem ein ununterbrochener Fahrbetrieb des Fahrzeugs aufgenommen worden ist, handelt, werden ausschließlich solche Temperaturwerte der mittels der Messvorrichtungen gemessenen Temperaturen berücksichtigt, die eine zuverlässige Zuordnung eines Fahrzeugluftreifens mittels des Modells ermöglichen. Hintergrund der zuverlässigen Zuordnung ist, dass zu Beginn der Aufnahme eines Fahrtbetriebs möglicherweise auch solche Temperaturen gemessen werden, die noch keine charakteristische Zuordnungsmöglichkeit eines Fahrzeugluftreifens zu der Position des Fahrzeugluftreifens an dem Fahrzeug ermöglichen.

Gemäß einer vorzugsweisen Ausgestaltungsform der vorliegenden Erfindung wird die Position des jeweiligen Fahrzeugluftreifens am Fahrzeug in Abhängigkeit ausschließlich solcher gemessener Temperaturen bestimmt, die erst ab einer Mindestfahrstrecke gemessen worden sind. Dabei handelt es sich bei der Mindestfahrstrecke um eine mittels des Fahrzeugs gefahrene Mindestrecke ab dem Zeitpunkt, zu dem ein ununterbrochener Fahrbetrieb des Fahrzeugs aufgenommen worden ist.

Erfindungsgemäß hängt die Mindestzeitdauer von technischen Parametern des Fahrzeugs, von technischen Parametern der Fahrzeugluftreifen und/oder von den Bedingungen des Fahrbetriebs des Fahrzeugs ab. Bei den Bedingungen des Fahrbetriebs des Fahrzeugs handelt es sich beispielsweise um die Fahrgeschwindigkeit des Fahrzeugs.

Die Mindestzeitdauer beträgt beispielsweise 20 Minuten.

Gemäß einer nächsten vorzugsweisen Ausgestaltungsform der vorliegenden Erfindung verhält sich für den Fall, wonach die Mindestzeitdauer von der Fahrgeschwindigkeit des Fahrzeugs abhängt, die Länge der Mindestzeitdauer umgekehrt proportional zu der Fahrgeschwindigkeit.

Gemäß einer nächsten vorzugsweisen Ausgestaltungsform der vorliegenden Erfindung werden für jeden Fahrzeugluftreifen Temperaturen zu nacheinander folgenden Zeitpunkten gemessen und jedem Fahrzeugluftreifen wird eine Zeitreihe von Werten der gemessenen Temperaturen zugeordnet. Dabei wird die Position des jeweiligen Fahrzeugluftreifens am Fahrzeug in Abhängigkeit der jeweils zugeordneten Zeitreihe der Werte der gemessenen Temperaturen bestimmt.

Gemäß einer nächsten vorzugsweisen Ausgestaltungsform der vorliegenden Erfindung wird die Position des jeweiligen Fahrzeugluftreifens am Fahrzeug in Abhängigkeit des Temperaturgradienten der jeweils zugeordneten Zeitreihe der Werte der gemessenen Temperaturen bestimmt.

Gemäß einer nächsten vorzugsweisen Ausgestaltungsform der vorliegenden Erfindung werden mittels der Messvorrichtungen Signale zu mindestens einem gemeinsamen Empfänger gesendet. Dabei wird die Position des jeweiligen Fahrzeugluftreifens am Fahrzeug zusätzlich in Abhängigkeit der Stärke der Signale bestimmt. Die Signale enthalten vorzugsweise Informationen über die gemessenen Temperaturen.

Die Messvorrichtungen weisen zur Sendung von Signalen insbesondere Sendeelemente zur Sendung elektromagnetischer Wellen auf.

Bei dem mindestens einen gemeinsamen Empfänger handelt es sich insbesondere um die Auswertevorrichtung. Die Auswertevorrichtung weist insbesondere Empfangsmittel zum Empfang elektromagnetischer Wellen auf.

Gemäß einer nächsten vorzugsweisen Ausgestaltungsform der vorliegenden Erfindung wird die Position des jeweiligen Fahrzeugluftreifens am Fahrzeug zusätzlich in Abhängigkeit einer momentan gemessenen Empfangsstärke der Signale bestimmt.

Insbesondere ist die Sendestärke sämtlicher Signale gleich oder annähernd gleich oder bekannt.

Gemäß einer nächsten vorzugsweisen Ausgestaltungsform der vorliegenden Erfindung wird die Position des jeweiligen Fahrzeugluftreifens am Fahrzeug zusätzlich in Abhängigkeit einer durchschnittlichen Empfangsstärke der Signale bestimmt. Dabei handelt es sich um die durchschnittliche Empfangsstärke der Signale eines vorhergegangenen, festlegbaren Zeitraums.

Gemäß einer nächsten vorzugsweisen Ausgestaltungsform der vorliegenden Erfindung wird die Position des jeweiligen Fahrzeugluftreifens am Fahrzeug zusätzlich in Abhängigkeit einer maximalen Empfangsstärke der Signale bestimmt. Dabei handelt es sich um die maximale Empfangsstärke der Signale eines vorhergegangenen, festlegbaren Zeitraums.

Gemäß einer nächsten vorzugsweisen Ausgestaltungsform der vorliegenden Erfindung wird die Position des jeweiligen Fahrzeugluftreifens am Fahrzeug zusätzlich in Abhängigkeit einer minimalen, aber von Null verschiedenen Empfangsstärke der Signale bestimmt. Dabei handelt es sich um die minimale, aber von Null verschiedene Empfangsstärke der Signale eines vorhergegangenen, festlegbaren Zeitraums.

Gemäß einer nächsten vorzugsweisen Ausgestaltungsform der vorliegenden Erfindung wird die Position des jeweiligen Fahrzeugluftreifens am Fahrzeug zusätzlich in Abhängigkeit eines Medianwertes der Empfangsstärke der Signale bestimmt. Dabei handelt es sich bei dem Medianwert der Empfangsstärke der Signale um die Signale eines vorhergegangenen, festlegbaren Zeitraumes.

Gemäß einer nächsten vorzugsweisen Ausgestaltungsform der vorliegenden Erfindung werden mittels der Messvorrichtungen Signale zu einer Mehrzahl gemeinsamer Empfänger gesendet. Dabei wird die Position des jeweiligen Fahrzeugluftreifens am Fahrzeug zusätzlich in Abhängigkeit der Empfangsstärke der Signale an den mehreren Empfängern bestimmt.

Durch den erfindungsgemäßen Umstand, wonach mittels der Messvorrichtungen Signale zu einer Mehrzahl gemeinsamer Empfänger gesendet werden, wobei die Position des jeweiligen Fahrzeugluftreifens am Fahrzeug zusätzlich in Abhängigkeit der Empfangsstärke der Signale bestimmt wird, kann die Position der Messvorrichtung, und damit die Position des Fahrzeugluftreifens selbst, mittels eines Triangulationsverfahrens bestimmt werden.

Gemäß einer nächsten vorzugsweisen Ausgestaltungsform der vorliegenden Erfindung wird für den Fall, wonach werden mittels der Messvorrichtungen Signale zu einer Mehrzahl gemeinsamer Empfänger gesendet werden und die Position des jeweiligen Fahrzeugluftreifens am Fahrzeug zusätzlich in Abhängigkeit der Empfangsstärke der Signale bestimmt wird, die Position zusätzlich in Abhängigkeit einer durchschnittlichen Empfangsstärke der Signale eines vorhergegangenen, festlegbaren Zeitraums bestimmt oder zusätzlich in Abhängigkeit einer maximalen Empfangsstärke der Signale eines vorhergegangenen, festlegbaren Zeitraums bestimmt oder zusätzlich in Abhängigkeit einer minimalen aber von Null verschiedenen Empfangsstärke der Signale eines vorhergegangenen, festlegbaren Zeitraums bestimmt oder zusätzlich in Abhängigkeit eines Medianwertes der Empfangsstärke der Signale eines vorhergegangenen, festlegbaren Zeitraums bestimmt.

Weitere Vorteile, Merkmale und Einzelheiten, auf die die Erfindung in ihrem Umfang aber nicht beschränkt ist, werden nun anhand der Zeichnungen näher beschrieben.

Es zeigt:
Fig. 1: Ein Fahrzeug, an dem mittels des erfindungsgemäßen Verfahrens die Position eines Fahrzeugluftreifens bestimmt wird;
Fig. 2: Eine schematische Darstellung eines modellhaften Zusammenhangs zwischen einer Temperatur eines Fahrzeugluftreifens und der Position des Fahrzeugluftreifens an dem Fahrzeug.

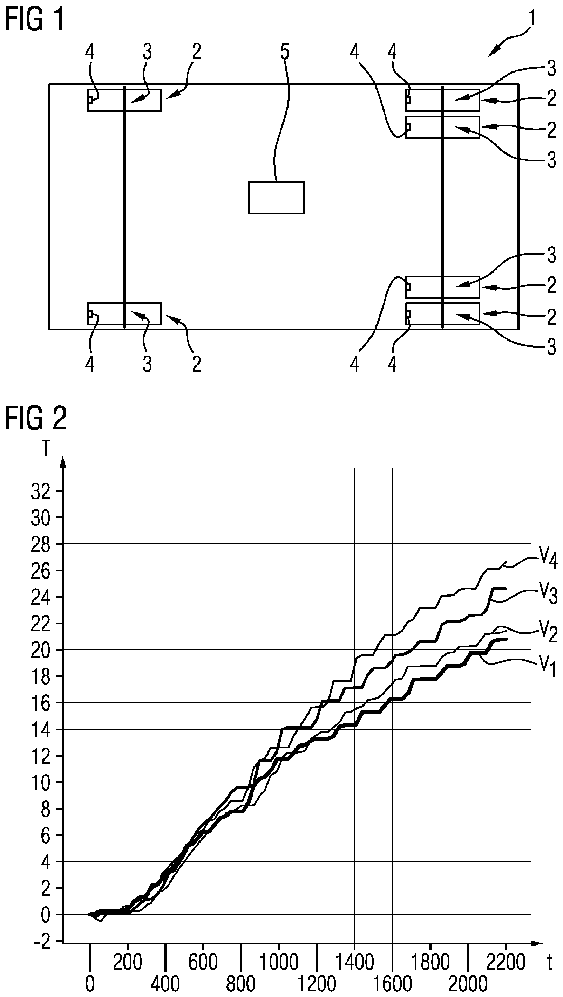

In der Figur 1 ist ein Fahrzeug 1 schematisch dargestellt. Das Fahrzeug 1 weist eine Mehrzahl an Fahrzeugluftreifen 2 auf. Die Fahrzeugluftreifen 2 weisen verschiedene Positionen 3 an dem Fahrzeug 1 auf. Jeder Fahrzeugluftreifen 2 weist eine Messvorrichtung 4 auf. Jede Messvorrichtung 4 ist geeignet, eine Temperatur des jeweiligen Fahrzeugluftreifens 2 zu messen.

Gemäß der in der Figur 1 schematisch dargestellten Ausführungsform des Fahrzeugs 1 ist eine Auswertevorrichtung 5 an dem Fahrzeug angeordnet. Mittels der Auswertevorrichtung 5 können die mittels der Messvorrichtungen 4 gemessenen Temperaturen ausgewertet werden. Insbesondere ist die Auswertevorrichtung 5 derart eingerichtet, dass mittels eines bereitgestellten Modells die Position 3 eines jeweiligen Fahrzeugluftreifens 2 an dem Fahrzeug 1 bestimmt werden kann. Dabei kann mittels der Auswertevorrichtung 5 die Position 3 des jeweiligen Fahrzeugluftreifens 2 an dem Fahrzeug 1 in Abhängigkeit der den Fahrzeugluftreifen 2 zugeordneten Werte der gemessenen Temperaturen mittels des Modells bestimmt werden.

In der Figur 2 ist ein schematischer Zusammenhang zwischen einer gemessenen Temperatur T und einer Position eines Fahrzeugluftreifens zur Nutzung als Modell schematisch dargestellt. Dargestellt ist auf der Ordinate die zu einem Messzeitpunkt t gemessene Temperatur T eines Fahrzeugluftreifens gegenüber dem Messzeitpunkt t auf der Abszisse. Der Verlauf V₁ eines ersten Fahrzeugluftreifens entspricht einer ersten Position, der Verlauf V₂ entspricht einer zweiten Position eines Fahrzeugluftreifens an dem Fahrzeug, der Verlauf V₃ entspricht einer dritten Position eines Fahrzeugluftreifens an dem Fahrzeug, der Verlauf V₄ entspricht einer vierten Position eines Fahrzeugluftreifens an dem Fahrzeug.

### Bezugszeichenliste

- 1: Fahrzeug
- 2: Fahrzeugluftreifen
- 3: Position eines Fahrzeugluftreifens an einem Fahrzeug
- 4: Messvorrichtung
- 5: Auswertevorrichtung

## Patentansprüche

1. Verfahren zur Bestimmung einer Position (3) eines Fahrzeugluftreifens (2) an einem Fahrzeug (1), aufweisend mindestens einen der folgenden Schritte:
- Bereitstellen eines Fahrzeugs (1), wobei das Fahrzeug (1) eine Mehrzahl an Fahrzeugluftreifen (2) aufweist, wobei jeder der Fahrzeugluftreifen (2) eine Messvorrichtung (4) aufweist, wobei jede Messvorrichtung (4) geeignet ist, eine Temperatur des Fahrzeugluftreifens (2), in oder an dem die Messvorrichtung (4) angeordnet ist, zu messen;
- Messen der Temperaturen der Fahrzeugluftreifen (2) mittels der Messvorrichtungen (4), wobei jedem Fahrzeugluftreifen (2) ein Wert, der an oder in ihm gemessenen Temperatur, zugeordnet wird;
- Bereitstellen einer Auswertevorrichtung (5), wobei die den Fahrzeugluftreifen (2) zugeordneten Werte der mittels der Messvorrichtungen (4) gemessenen Temperaturen mittels der Auswertevorrichtung (5) ausgewertet werden können,
- Bereitstellen eines Modells, wobei das Modell zu einem Bestimmen der Position (3) des jeweiligen Fahrzeugluftreifens (2) am Fahrzeug (1), in Abhängigkeit der den Fahrzeugluftreifen (2) zugeordneten Werte der gemessenen Temperaturen, vorgesehen ist, **dadurch gekennzeichnet, dass** die Position (3) des jeweiligen Fahrzeugluftreifens (2) am Fahrzeug (1) in Abhängigkeit ausschließlich solcher gemessenen Temperaturen bestimmt wird, die erst ab einer Mindestzeitdauer gemessen worden sind, wobei es sich bei der Mindestzeitdauer um eine Zeitdauer ab dem Zeitpunkt, zu dem ein ununterbrochener Fahrbetrieb des Fahrzeugs (1) aufgenommen worden ist, handelt, wobei die Mindestzeitdauer von technischen Parametern des Fahrzeugs (1), von technischen Parametern der Fahrzeugluftreifen (2) und/oder von den Bedingungen des Fahrbetriebs des Fahrzeugs (1), beispielsweise der Fahrgeschwindigkeit des Fahrzeugs (1), abhängt, wobei die Mindestzeitdauer beispielsweise 20 Minuten beträgt.

2. Verfahren nach Anspruch 1, **dadurch gekennzeichnet, dass** die Position (3) des jeweiligen Fahrzeugluftreifens (2) am Fahrzeug (1) in Abhängigkeit der den Fahrzeugluftreifen (2) zugeordneten Werte der gemessenen Temperaturen mittels des Modells mittels der Auswertevorrichtung (5) bestimmt wird.

3. Verfahren nach einem der vorhergehenden Ansprüche, **dadurch gekennzeichnet, dass** für den Fall, wonach die Mindestzeitdauer von der Fahrgeschwindigkeit des Fahrzeugs (1) abhängt, sich die Länge der Mindestzeitdauer umgekehrt proportional zu der Fahrgeschwindigkeit verhält.

4. Verfahren nach einem der vorhergehenden Ansprüche, **dadurch gekennzeichnet, dass** für jeden Fahrzeugluftreifen (2) Temperaturen zu nacheinander folgenden Zeitpunkten gemessen werden und jedem Fahrzeugluftreifen (2) eine Zeitreihe von Werten der gemessenen Temperaturen zugordnet wird, wobei die Position (3) des jeweiligen Fahrzeugluftreifens (2) am Fahrzeug (1) in Abhängigkeit der jeweils zugeordneten Zeitreihe der Werte der gemessenen Temperaturen bestimmt wird.

5. Verfahren nach dem vorhergehenden Anspruch, **dadurch gekennzeichnet, dass** die Position (3) des jeweiligen Fahrzeugluftreifens (2) am Fahrzeug (1) in Abhängigkeit des Temperaturgradienten der jeweils zugeordneten Zeitreihe der Werte der gemessenen Temperaturen bestimmt wird.

6. Verfahren nach einem der vorhergehenden Ansprüche, **dadurch gekennzeichnet, dass** mittels der Messvorrichtungen (4) Signale zu mindestens einem gemeinsamen Empfänger (5) gesendet werden, wobei die Position (3) des jeweiligen Fahrzeugluftreifens (2) am Fahrzeug (1) zusätzlich in Abhängigkeit der Empfangsstärke der Signale bestimmt wird.

7. Verfahren nach einem der vorhergehenden Ansprüche, **dadurch gekennzeichnet, dass** die Position (3) des jeweiligen Fahrzeugluftreifens (2) am Fahrzeug (1) zusätzlich in Abhängigkeit einer momentan gemessenen Empfangsstärke der Signale bestimmt wird, oder dass die Position (3) des jeweiligen Fahrzeugluftreifens (2) am Fahrzeug (1) zusätzlich in Abhängigkeit einer durchschnittlichen Empfangsstärke der Signale bestimmt wird, oder dass die Position (3) des jeweiligen Fahrzeugluftreifens (2) am Fahrzeug (1) zusätzlich in Abhängigkeit einer maximalen Empfangsstärke der Signale bestimmt wird, oder dass die Position (3) des jeweiligen Fahrzeugluftreifens (2) am Fahrzeug (1) zusätzlich in Abhängigkeit einer minimalen aber von Null verschiedenen Empfangsstärke der Signale bestimmt wird , oder dass die Position (3) des jeweiligen Fahrzeugluftreifens (2) am Fahrzeug (1) zusätzlich in Abhängigkeit eines Medianwertes der Empfangsstärke der Signale bestimmt wird.

8. Verfahren nach einem der vorhergehenden Ansprüche, **dadurch gekennzeichnet, dass** mittels der Messvorrichtungen (4) Signale zu einer Mehrzahl gemeinsamer Empfänger gesendet werden, wobei die Position (3) des jeweiligen Fahrzeugluftreifens (2) am Fahrzeug (1) zusätzlich in Abhängigkeit der Empfangsstärke der Signale bestimmt wird.

## Claims

1. Method for determining a position (3) of a pneumatic vehicle tyre (2) on a vehicle (1), comprising at least one of the following steps:
- providing a vehicle (1), the vehicle (1) having a plurality of pneumatic vehicle tyres (2), each of the pneumatic vehicle tyres (2) having a measuring device (4), each measuring device (4) being suitable for measuring a temperature of the pneumatic vehicle tyre (2) in or on which the measuring device (4) is arranged;
- measuring the temperatures of the pneumatic vehicle tyres (2) by means of the measuring devices (4), each pneumatic vehicle tyre (2) being assigned a value of the temperature measured at or in it;
- providing an evaluation device (5), the values of the temperatures measured by means of the measuring devices (4) that are assigned to the pneumatic vehicle tyres (2) being able to be evaluated by means of the evaluation device (5),
- providing a model, the model being provided for the purpose of determining the position (3) of the respective pneumatic vehicle tyre (2) on the vehicle (1) on the basis of the values of the measured temperatures that are assigned to the pneumatic vehicle tyres (2), **characterized in that** the position (3) of the respective pneumatic vehicle tyre (2) on the vehicle (1) is determined solely on the basis of those measured temperatures which have only been measured for a minimum period of time, the minimum period of time being a period of time from the time at which uninterrupted driving of the vehicle (1) has been started, the minimum period of time depending on technical parameters of the vehicle (1), on technical parameters of the pneumatic vehicle tyres (2) and/or on the driving conditions of the vehicle (1), for example the driving speed of the vehicle (1), the minimum period of time being 20 minutes, for example.

2. Method according to Claim 1, **characterized in that** the position (3) of the respective pneumatic vehicle tyre (2) on the vehicle (1) is determined, on the basis of the values of the measured temperatures that are assigned to the pneumatic vehicle tyres (2), by means of the model by means of the evaluation device (5).

3. Method according to one of the preceding claims, **characterized in that**, in the event of the minimum period of time depending on the driving speed of the vehicle (1), the length of the minimum period of time is inversely proportional to the driving speed.

4. Method according to one of the preceding claims, **characterized in that** temperatures are measured at successive times for each pneumatic vehicle tyre (2) and each pneumatic vehicle tyre (2) is assigned a time series of values of the measured temperatures, the position (3) of the respective pneumatic vehicle tyre (2) on the vehicle (1) being determined on the basis of the respectively assigned time series of the values of the measured temperatures.

5. Method according to the preceding claim, **characterized in that** the position (3) of the respective pneumatic vehicle tyre (2) on the vehicle (1) is determined on the basis of the temperature gradient of the respectively assigned time series of the values of the measured temperatures.

6. Method according to one of the preceding claims, **characterized in that** signals are sent by means of the measuring devices (4) to at least one common receiver (5), the position (3) of the respective pneumatic vehicle tyre (2) on the vehicle (1) additionally being determined on the basis of the reception strength of the signals.

7. Method according to one of the preceding claims, **characterized in that** the position (3) of the respective pneumatic vehicle tyre (2) on the vehicle (1) is additionally determined on the basis of a currently measured reception strength of the signals, or **in that** the position (3) of the respective pneumatic vehicle tyre (2) on the vehicle (1) is additionally determined on the basis of an average reception strength of the signals, or **in that** the position (3) of the respective pneumatic vehicle tyre (2) on the vehicle (1) is additionally determined on the basis of a maximum reception strength of the signals, or **in that** the position (3) of the respective pneumatic vehicle tyre (2) on the vehicle (1) is additionally determined on the basis of a minimum reception strength of the signals that differs from zero, or **in that** the position (3) of the respective pneumatic vehicle tyre (2) on the vehicle (1) is additionally determined on the basis of a median value of the reception strength of the signals.

8. Method according to one of the preceding claims, **characterized in that** signals are sent by means of the measuring devices (4) to a plurality of common receivers, the position (3) of the respective pneumatic vehicle tyre (2) on the vehicle (1) additionally being determined on the basis of the reception strength of the signals.

## Revendications

1. Procédé de détermination d'une position (3) d'un pneu de véhicule (2) sur un véhicule (1), comprenant au moins l'une des étapes suivantes :
- fournir un véhicule (1), le véhicule (1) possédant une pluralité de pneus de véhicule (2), chacun des pneus de véhicule (2) possédant un dispositif de mesure (4), chaque dispositif de mesure (4) étant approprié pour mesurer une température du pneu de véhicule (2) dans ou sur lequel le dispositif de mesure (4) est disposé ;
- mesurer les températures des pneus de véhicule (2) au moyen des dispositifs de mesure (4), une valeur de la température mesurée dans ou sur celui-ci étant associée à chaque pneumatique de véhicule (2) ;
- fournir un dispositif d'évaluation (5), les valeurs des températures mesurées au moyen des dispositifs de mesure (4) et associées aux pneus de véhicule (2) pouvant être évaluées au moyen du dispositif d'évaluation (5),
- fournir un modèle, le modèle étant prévu pour déterminer la position (3) du pneu de véhicule (2) respectif sur le véhicule (1) en fonction des valeurs des températures mesurées associées aux pneumatiques de véhicule (2), **caractérisé en ce que** la position (3) du pneu de véhicule (2) respectif sur le véhicule (1) est déterminée exclusivement en fonction de températures mesurées, qui ont été mesurées uniquement à partir d'une durée minimale, la durée minimale étant une durée à compter de l'instant où une conduite ininterrompue du véhicule (1) a été entreprise, la durée minimale dépendant de paramètres techniques du véhicule (1), de paramètres techniques des pneus de véhicule (2) et/ou des conditions de fonctionnement du véhicule (1), par exemple de la vitesse de conduite du véhicule (1), la durée minimale étant par exemple de 20 minutes.

2. Procédé selon la revendication 1, **caractérisé en ce que** la position (3) du pneu de véhicule (2) respectif sur le véhicule (1) est déterminée au à l'aide du modèle au moyen du dispositif d'évaluation (5) en fonction des valeurs des températures mesurées associées aux pneumatiques de véhicule (2).

3. Procédé selon l'une des revendications précédentes, **caractérisé en ce que**, dans le cas où la durée minimale dépend de la vitesse de marche du véhicule (1), la longueur de la durée minimale se comporte de manière inversement proportionnelle à la vitesse de marche.

4. Procédé selon l'une des revendications précédentes, **caractérisé en ce que**, pour chaque pneu de véhicule (2), des températures sont mesurées à des instants successifs et une série temporelle de valeurs des températures mesurées est associée à chaque pneu de véhicule (2), la position (3) du pneu de véhicule (2) respectif sur le véhicule (1) étant déterminée en fonction de la série temporelle respectivement associée de valeurs des températures mesurées.

5. Procédé selon la revendication précédente, **caractérisé en ce que** la position (3) du pneu de véhicule (2) respectif sur le véhicule (1) est déterminée en fonction du gradient de température de la série temporelle respectivement associée des valeurs des températures mesurées.

6. Procédé selon l'une des revendications précédentes, **caractérisé en ce que** des signaux sont transmis au moyen des dispositifs de mesure (4) à au moins un récepteur commun (5), la position (3) du pneu de véhicule (2) respectif sur le véhicule (1) étant en outre déterminée en fonction de l'intensité de réception des signaux.

7. Procédé selon l'une des revendications précédentes, **caractérisé en ce que** la position (3) du pneu de véhicule (2) respectif sur le véhicule (1) est en outre déterminée en fonction d'une intensité de réception instantanée des signaux mesurée, ou **en ce que** la position (3) du pneu de véhicule (2) respectif sur le véhicule (1) est en outre déterminée en fonction d'une intensité de réception moyenne des signaux, ou **en ce que** la position (3) du pneu de véhicule (2) respectif sur le véhicule (1) est en outre déterminée en fonction d'une intensité de réception maximale des signaux, ou **en ce que** la position (3) du pneu de véhicule (2) respectif sur le véhicule (1) est en outre déterminée en fonction d'une intensité de réception minimale mais non nulle des signaux, ou **en ce que** la position (3) du pneu de véhicule (2) respectif sur le véhicule (1) est en outre déterminée en fonction d'une valeur médiane de l'intensité de réception des signaux.

8. Procédé selon l'une des revendications précédentes, **caractérisé en ce que** des signaux sont transmis au moyen des dispositifs de mesure (4) à une pluralité de récepteurs communs, la position (3) du pneu de véhicule (2) respectif sur le véhicule (1) étant en outre déterminée en fonction de l'intensité de réception des signaux.
